# EUROPEAN PATENT SPECIFICATION

(11) **EP 3 299 342 B1**
(45) Date of publication and mention of the grant of the patent: **24.01.2024**
(21) Application number: 15892141.1
(22) Date of filing: 18.05.2015
(51) Int. Cl.: C02F 1/20, C02F 103/00, C02F 1/467, B01D 19/00

(54) **DEHYDROGENATION TANK FOR BALLAST WATER TREATMENT SYSTEM HAVING SAME**
DEHYDRIERUNGSTANK FÜR BALLASTWASSERBEHANDLUNGSSYSTEM
RÉSERVOIR DE DÉSHYDROGÉNATION POUR SYSTÈME DE TRAITEMENT D'EAU DE BALLAST

(43) Date of publication of application: 28.03.2018
(73) Proprietor: Sunrui Marine Environment Engineering Co., Ltd., Qingdao, Shandong 266101 (CN)
(72) Inventor: LIU, Guangzhou, Qingdao Shandong 266101 (CN); DUAN, Dongxia, Qingdao Shandong 266101 (CN); YAO, Ping, Qingdao Shandong 266101 (CN); WANG, Hongren, Qingdao Shandong 266101 (CN)
(74) Representative: Haseltine Lake Kempner LLP
(86) International application number: PCT/CN2015/079151
(87) International publication number: WO 2016/183762

(56) References cited:
- CN-A- 101 068 750
- CN-A- 101 428 919
- CN-A- 102 502 926
- CN-A- 103 043 809
- CN-A- 104 817 129
- CN-A- 104 817 214
- CN-U- 202 379 779
- CN-U- 202 430 075
- CN-U- 203 451 322
- CN-U- 204 779 177
- JP-A- H10 323 671
- JP-A- 2000 126 507
- JP-A- 2001 104 941
- JP-A- 2009 112 996
- JP-A- 2012 246 553
- JP-A- 2014 194 047
- KR-A- 20110 023 484
- KR-A- 20110 023 484

## Description

### TECHNICAL FIELD

The present invention relates to ballast water treatment technology for ship, and more particularly to a dehydrogenation tank.

### BACKGROUND

During the voyage of a ship, ballasting water is necessary. When ballasting, local aquatic organisms are brought into the ballast tank and then discharged to the destination waterway with the ballast water. The ballast water, carried by the ship from one place to another, causes the spread of harmful aquatic organisms and pathogens. In order to effectively control and prevent the spread of harmful aquatic organisms and pathogens, which were caused by the ballast water of ships, International Marine Organization (IMO) adopted the "International Convention for the Control and Management of Ships' Ballast Water Sediments" in 2004. "The Convention" requires all ships to be equipped with ballast water treatment system on schedule and is applicable retroactively to all present ships. "The Convention" established a standard (also known as D-2 standard) for the ballast water treatment by explicitly stipulating the size and quantity of survivable organisms, and the species and quantity of pathogenic microorganisms in the ballast water as well.

Branch Electrolysis is a mainstream technique currently implemented in treatment of ballast water. Its operation is as follows. When loading the ballast water in ships, a small portion of the seawater (about 1-2% of the treatment amount of the seawater) is diverted from the ballast water main pipeline to an electrolytic tank and is electrolyzed to further produce a certain amount of total residue oxides (TRO) solution (containing sodium hypochlorite) with high concentration and hydrogen gas as byproducts. The TRO solution, mixed with hydrogen gas, is transferred into a dehydrogenation unit and the hydrogen gas is then separated out from the TRO solution by the dehydrogenation unit. The separated hydrogen gas is diluted with air introduced by an air blower and then discharged outboard. The TRO solution, with the hydrogen gas removed, is introduced back to the ballast water main pipeline through a dispensing pump, and mixes thoroughly with the seawater in the main pipeline. This brings the concentration of TRO solution mixed with the seawater reaches a level which satisfies water quality requirement of the ballast water of IMO (the D-2 standard).

In the electrolysis treatment technology, hydrogen gas is an inevitable byproduct produced at the cathode of the electrolytic tank. Since a range of an explosion threshold of hydrogen gas in air is wide (explosion is easily triggered when a concentration of hydrogen in air is in a range from 4 to 75% V/V), hydrogen gas is not allowed to enter the ballast tank and must be separated out from the TRO solution and its concentration is required to be diluted by air to a concentration below the explosion threshold (the hydrogen gas is generally required to be diluted to a concentration less than 1% V/V), and then discharged over the board of the ship. In the electrolysis treatment system for ships' ballast, the equipment which separates hydrogen gas from the TRO solution is called as dehydrogenation unit.

In the electrolysis treatment system for ships' ballast, the dehydrogenation unit is a key component. There are two parameters for evaluating the performance of the dehydrogenation unit: the first one is dehydrogenation efficiency which relates to safety of the entire ballast water treatment system; the second one is the volume of the dehydrogenation unit and the volume of the dehydrogenation unit in the ballast water treatment system is typically large, which leads the entire ballast water treatment system have a large volume. The two parameters often contradict with each other. For example, a dehydrogenation unit with high dehydrogenation efficiency requires a large volume, and a small dehydrogenation unit often needs to sacrifice its dehydrogenation efficiency. Due to limitation of installation room in ships as well as high requirements of safety, there is an urgent need to develop a safe and compact ballast water treatment system. For this purpose, developing of a dehydrogenation unit with small volume and high efficiency is a key to develop a safe and compact ballast water treatment system.

The current dehydrogenation units are divided into two categories. The first category relates to a hydrogen separator based on the principle of cyclone separation. The dehydrogenation unit of this category has an advantage of high dehydrogenation efficiency, however, this kind of dehydrogenation technology requires the inlet pressure and the outlet pressure of cyclone separator remain relatively constant as well as narrow range of flow change of the cyclone separator. That is to say, its application conditions are relatively harsh and strict, and those application conditions are thus not easy to meet in real practice, which greatly decreases the separation effect of the cyclone separator and even result in generation of air-resistance phenomenon. The second category relates to a traditional dehydrogenation tank whose operation principle is to inject the TRO solution mixed with hydrogen gas into the tank, let the TRO solution stay in the tank for a period of time, making the hydrogen gas be accumulated and escape from the TRO solution to achieve the purpose of separation. The dehydrogenation unit of this category has an advantage of high reliability. However, the volume of the dehydrogenation tank of this kind of dehydrogenation unit is relative large and a sufficient long time is needed for the TRO solution mixed with hydrogen gas staying in the tank, to make the hydrogen gas in the TRO solution be fully separated therefrom. Therefore, using a smaller dehydrogenation tank will decrease dehydrogenation efficiency. However, due to the limitation of installation room in ships, using a large dehydrogenation tank will leads a large volume of the ballast water treatment system. Therefore, it is not appropriate for the real practice.

JP2014194047A provides a gas-liquid separator having a container body. The container body has an internal space capable of storing a gas-liquid mixed liquid, and the container body is provided with a mixed liquid inflow inlet for causing the gas-liquid mixed liquid to flow in the internal space, a gas discharge outlet for discharging a gas after separation and a liquid discharge outlet for discharging water after separation. The container body is also provided with a partition plate which partitions the internal space into an upper space and a lower space and is composed partially or entirely of a water-permeable net-like member. The mixed liquid inflow inlet and the gas discharge outlet are opened on the side of the upper space, and the liquid discharge outlet is opened on the side of the lower space.

KR20110023484A provides an electrolysis type ballast water treatment system which includes an electrolytic bath, a hydrogen separating chamber, electrolytic water, an injection pump, an electrolytic water inlet, and a hydrograph. A water ejector, an inlet pipe for hydrogen exhaust driving source, hydrogen exhaustion driving source, a mixture water draining pipe, an adjusting valve, and a manometer are prepared. The electrolytic bath is connection with raw water driving source through a raw water inflowing pipe.

JP2012246553A discloses a seawater electrolysis system which is equipped with the chlorination equipment that electrolyzes seawater passed through an electrolytic cell body housing an anode and a cathode as electrodes by electric current applied between the anode and the cathode, wherein the anode is made of titanium coated by a coating material containing iridium oxide. The seawater electrolysis system is equipped with a concentrating means for increasing the concentration of chloride ions contained in the seawater, wherein the concentrating means is located before the chlorination equipment.

CN103043809A discloses a cyclone stripping integration ammonia removal reaction tower. The reaction tower is a sealing tank of an overall structure, including an input device, a cyclone separation device, a stripping device, a detection device and an output device, wherein the cyclone separation device is disposed on the top of the tank, the stripping device is arranged below the tank, the cyclone separation device and the stripping device are divided by a baffle, and the bottom of the cyclone separation device is provided with a water distributor communicated with the stripping device. The invention employs the way of combining the cyclone separation and the stripping, provides an integration reactor which can remove ammonia efficiently, and has the characteristics of high ammonia removal efficiency, low energy consumption and simple operation.

JP2009112996A discloses a combustion exhaust gas that is brought into a gas-liquid contact reaction with seawater, so as to generate an acidic waste liquid, and the acidic waste liquid is mixed with taken seawater for a seawater-utilizing system, so as to regulate the pH of the seawater to 5 to 7.3, and the pH-regulated seawater is fed as water for a seawater-utilizing system. Further, as a means of bringing the combustion exhaust gas into a gas-liquid contact reaction with seawater, so as to generate an acidic waste liquid, a combustion exhaust gas purifying apparatus composed of a scrubber having a gas-liquid contact part provided with a gas diffusion electrode is used, and seawater and a combustion exhaust gas are fed to the gas-liquid contact part, thus a gas-liquid contact reaction is caused, so as to perform exhaust gas purifying treatment, and simultaneously, gaseous hydrogen is fed to the gas diffusion electrode, and a fuel cell power generation reaction between the gaseous hydrogen and oxygen is caused at the surface of the gas diffusion electrode, so as to generate the acidic waste liquid.

### SUMMARY

Accordingly, the present invention provides a dehydrogenation tank according to the appended claims having a small volume and high dehydrogenation efficiency.

The present invention provides a dehydrogenation tank, which includes a flow stirring module disposed at the middle of the dehydrogenation tank for stirring solution flowing therethrough, an atomization spray disposed at the center of the upper portion of the dehydrogenation tank, and another flow stirring module disposed at the bottom of the dehydrogenation tank for stirring solution flowing therethrough . The flow stirring modules, disposed at the middle and the bottom of the dehydrogenation tank, are both composed of stainless steel mesh, and both include at least two layers of flow stirring mesh and a support of flow stirring mesh for supporting and fastening the at least two layers of flow stirring mesh. The flow stirring mesh and the support of flow stirring mesh are both made of stainless steel type 316L. A distance between the atomization spray and the top of the dehydrogenation tank is approximately 10 cm and pressure inside a jetting pipeline of the atomization is in a range of approximately 3 to 3.5 Bar. Mesh size of the flow stirring mesh at the bottom of the dehydrogenation tank is smaller than mesh size of the flow stirring mesh at the middle of the dehydrogenation tank.

According to one embodiment of the present invention, the mesh size of the flow stirring mesh at the middle of the dehydrogenation tank is approximately 5 by 5mm and the mesh size of the flow stirring mesh at the bottom of the dehydrogenation tank is approximately 2 by 2mm.

According to one embodiment of the present invention, the at least two layers of flow stirring mesh remain a distance of approximately 10 to 20 mm between adjacent layers through the support of the flow stirring mesh.

The embodiments of the present invention provided herein have at least advantages as follows:
In the present invention, by means of disposing flow stirring modules in the dehydrogenation tank, the TRO solution flowing into the dehydrogenation tank is fully stirred, so that hydrogen gas mixed with the TRO solution could diffuse out from the TRO solution fully and rapidly. Therefore, the purposes of increasing dehydrogenation efficiency as well as reducing volume of the dehydrogenation tank are both achieved.

The aforementioned description is a conceptual overview of the present invention. In order to make the technique of the present invention be clearly understood and enable in accordance with specification, and the above or other aspects, features and advantages of the present invention become apparent, embodiments and detailed descriptions in conjunction with the accompanying drawings are provided hereafter.

### BRIEF DESCRIPTION OF THE DRAWINGS

FIG. 1 schematically shows a block diagram of a ballast water treatment system not forming part of the present invention.
FIG. 2 schematically shows a structural diagram of a dehydrogenation tank.
FIG. 3 schematically shows a top view of the flow stirring module illustrated in FIG. 2.
FIG. 4 schematically shows a front view of the flow stirring module illustrated in FIG. 2.

### DETAILED DESCRIPTION OF PREFERRED EMBODIMENTS

In order to further illustrate the techniques and effect of the present invention adopted for achieving the aspects, exemplary embodiments, structure, features and the effects of the dehydrogenation tank according to the present invention will be described thoroughly in conjunction with the accompanying drawings and the preferred embodiments.

A ballast water treatment system including the dehydrogenation tank is also described.

The foregoing or other techniques, features and effects of the present invention will become apparent in the following detailed descriptions of the preferred embodiments in conjunction with the accompanying drawings. In view of descriptions of exemplary embodiments, the techniques and effects of the present invention adopted for achieving aspects will be further and specifically understood. The accompanying drawings are merely used for illustration and description, but not used to limit the present invention.

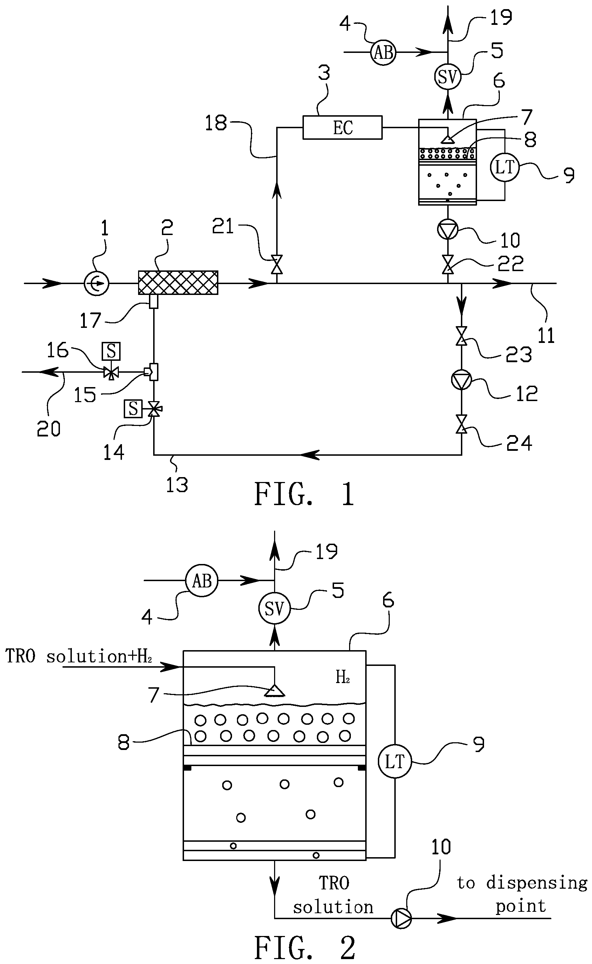

FIG.1 and its related descriptions are not considered as embodiments of the invention but as background art or examples useful for understanding the invention.

Please referring to FIG. 1, a ballast water treatment system includes a ballast water main pipeline 11, a ballast water branch pipeline 18, a hydrogen-discharging pipeline 19, a dispensing pipeline 13 and a waste-discharging pipeline 20, a ballast pump 1 and a filter 2 that are connected to the ballast water main pipeline 11, an electrolytic unit 3, a dehydrogenation tank 6, a first valve 21, a second valve 22 and a first dispensing pump 10 that are connected to the ballast water branch pipeline 18, a gas-liquid separator 5 and an explosion-proof blower 4 that are connected to the hydrogen-discharging pipeline 19, a third valve 23, a fourth valve 24, a second dispensing pump 12, a tee connector 15 and a first electromagnetic valve 14 that are located on and connected to the dispensing pipeline 13, and a second electromagnetic valve 16 that is connected to the waste-discharging pipeline 20. In one embodiment, the first through the fourth valves 21-24 are preferably manual valves.

Specifically, the ballast pump 1 and the filter 2 are sequentially disposed along and connected to the ballast water main pipeline 11.

The electrolytic unit 3 and the dehydrogenation tank 6 are sequentially disposed along and connected to the ballast water branch pipeline 18, and the joint of the inlet of the ballast water branch pipeline 18 and the ballast water main pipeline 11 is located at the downstream of the filter 2.

The first valve 21 is disposed on and connected to the ballast water main pipeline 18 and located between the ballast water main pipeline 11 and the inlet of the electrolytic unit 3. The electrolytic unit 3 is electrically connected to a control unit (not shown in drawings) of the ballast water treatment system so as to electrolyze seawater under control of the control unit and produce a mixture of TRO solution containing sodium hypochlorite and hydrogen gas.

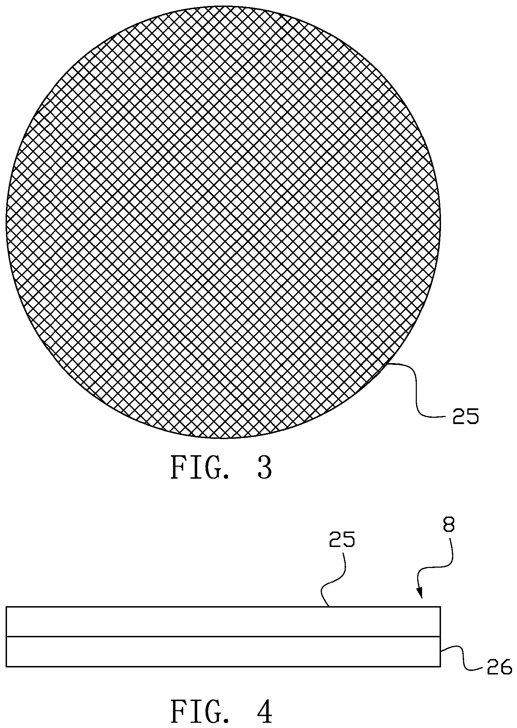

The inlet of the dehydrogenation tank 6 is connected to the outlet of the electrolytic unit 3. Please referring to FIG. 2 to FIG. 4 together, the dehydrogenation tank 6 is made of carbon steel, the volume of the dehydrogenation tank 6 is substantially equals to the amount of TRO solution flowing into the tank within 1 min (for example, if the flow rate of TRO solution is 6m³/h, the volume of the dehydrogenation tank 6 should be around 100 L), the ratio of the diameter to the height of the tank is preferably 3:4, the thickness of the wall of the tank is approximately 3 to 4mm, and sealant is applied inside the tank to prevent corrosion caused by TRO solution. A liquid inlet of the dehydrogenation tank 6 is extended across to the center of upper portion of the dehydrogenation tank 6 through a jetting pipeline, an atomizing spray 7 is provided at the liquid inlet of the dehydrogenation tank 6, hydrogen gas mixed with the TRO solution and conducted to the dehydrogenation tank 6 can be separated rapidly through atomization of the atomizing spray 7. The atomizing spray 7 spaces a distance of around 10 cm from the top of the tank in the height direction of the dehydrogenation tank 6, moreover, in order to ensure effect of atomization, the internal pressure of the jetting pipeline and the atomizing spray 7 is in a range of approximately 3 to 3.5 Bar. After being atomized and sprayed through the atomizing spray 7, most of the hydrogen gas in the TRO solution is removed, but a few of the smaller bubbles is still contained in the TRO solution.

To further increase dehydrogenation efficiency and remove the small bubbles remained in the TRO solution, the present invention further provides two flow stirring modules 8 (respectively called the first flow stirring module and the second flow stirring module hereafter) at the middle and the bottom of the dehydrogenation tank 6. The two flow stirring modules 8 are both composed of stainless steel mesh, and each includes at least one layer of flow stirring mesh 25 and a support 26 of flow stirring mesh for supporting and fastening the at least one flow stirring mesh. According to the present invention, the flow stirring mesh 25 and the support 26 of flow stirring mesh are both made of stainless steel type 316L, and each of the flow stirring modules 8 includes at least two layers of flow stirring mesh 25. Specifically, in one embodiment, each of the flow stirring modules 8 includes three layers of flow stirring mesh 25 and these three layers of flow stirring mesh 25 are fixed and fastened together through the support 26 of flow stirring mesh by soldering. The mesh size of the first flow stirring module is approximately 5 by 5 mm the mesh size of the second flow stirring module is approximately 2 by 2 mm, each support 26 of flow stirring mesh is used to fix the corresponding flow stirring meshes 25 together and remain a distance of approximately 10 to 20mm (preferably 10 mm) between the adjacent layers.
Understandably, in other embodiments of the present invention, the mesh sizes of the first flow stirring module and the second flow stirring module can be other appropriate numbers only if the mesh size of the first flow stirring module is greater than the mesh size of the second flow stirring module, and the first flow stirring module and the second flow stirring module both could facilitate to accumulate and separate hydrogen gas from the TRO solution.

Please continue to refer to FIG. 1 and FIG. 2, the gas-liquid separator 5 is disposed on and connected to the hydrogen discharging pipeline 19 and is connected to an air outlet disposed on the top of the dehydrogenation tank 6. The explosion-proof blower 4 is connected to the hydrogen discharging pipeline 19, and the air introduced by the explosion-proof blower 4 is mixed with the gas passing through the gas-liquid separator 5, so that the hydrogen gas separated by the dehydrogenation tank is diluted to a concentration below the explosion threshold, and then discharged over the board of the ships. The first dispensing pump 10 is connected to a liquid outlet at the bottom of the dehydrogenation tank 6, and connected to the ballast water main pipeline 11 through the second valve 22, the dehydrogenated TRO solution is injected into the dispensing point of the ballast water main pipeline 11 through the first dispensing pump 10. In addition, a level gauge 9 is disposed at one side of the dehydrogenation tank 6, the level gauge 9 is capable of remote communicating with the control unit, so that the level of the liquid inside the dehydrogenation tank 6 could be controlled between 1/2 to 3/4 of the total height of the dehydrogenation tank 6 through the cooperation of the control unit, the level gauge 9 and the first dispensing pump 10. In order to better control the level of the liquid inside the dehydrogenation tank 6, the first dispensing pump 10 is preferably a variable frequency dispensing pump.

The second dispensing pump 12, the third valve 23, the fourth valve 24, the tee connector 15 and the first electromagnetic valve 14 are disposed on and connected to the dispensing pipeline 13. The joint of the dispensing pipeline 13 and the ballast water main pipeline 11 is located at the downstream of the joint of the outlet of the ballast water branch pipeline 18 and the ballast water main pipeline 11. The third valve 23 is located close to the ballast water main pipeline 11 and between the ballast water main pipeline 11 and the second dispensing pump 12. The second dispensing pump 12 is located between the third valve 23 and the fourth valve 24. The first electromagnetic valve 14 is located at the downstream of the fourth valve 24, and between the fourth valve 24 and the tee connector 15. The tee connector 15 is located between the first electromagnetic valve 14 and a waste discharging outlet 17 of the filter 2. The second electromagnetic valve 16 is located on the waste-discharging pipeline 20 and connected the tee connector 15 to the outside of the ship.

The operation principle of the ballast water treatment system described in the present disclosure is: when the system is loading the ballast water, seawater is pumped into the filter 2 by the ballast pump 1, after the seawater is filtrated through the filter 2, the filtration passes through the waste-discharging outlet 17 of the filter 2, the tee connector 15 and the second electromagnetic valve 16, and then is discharged over the board of the ships while the filtrated seawater is conducted to the ballast water main pipeline 11. A portion of the seawater in the ballast water main pipeline 11 is introduced directly into the ballast tank while the other portion is conducted to the electrolytic unit 3 and electrolyzed to produce TRO solution and hydrogen gas. The TRO solution mixed with hydrogen gas is transferred to the dehydrogenation tank 6 and the hydrogen gas is separated from the TRO solution by the dehydrogenation tank 6. After the hydrogen gas is further separated through the gas-liquid separator 5, it is mixed and diluted with the air introduced by the explosion-proof blower 4 and is discharged over the board of the ships while the dehydrogenated TRO solution is introduced back into the ballast water main pipeline 11 through the action of the first dispensing pump 10. When the process of loading ballast water is finished (i.e. when the ballast pump 1 stops working), turning on the third valve 23, the fourth valve 24, the first electromagnetic valve 14 and the second dispensing pump 12, and turning off the second electromagnetic valve 16, and a certain amount of the seawater which was filtrated, electrolyzed and dehydrogenated, is pumped from the ballast water main pipeline 11 by the second dispensing pump 12 and is introduced into the filter 2 through the waste-discharging outlet 17. After the second dispensing pump 12 operates for a certain period, turning off the second dispensing pump 12, and all the valves connected to the waste-discharging outlet 17 of the filter 2 (i.e., the third valve 23, the fourth valve 24 and the first electromagnetic valve 14), and keeping the treated seawater in the filter 2 until next loading.

In summary, the ballast water treatment system of the present disclosure includes at least one of the following advantages :
1. The dehydrogenation tank of the present invention provides two flow stirring modules 8 at the middle and the bottom of the dehydrogenation tank 6, which can fully stir the TRO solution flowing into the dehydrogenation tank 6, and accelerate collection and separation of the hydrogen gas from the TRO solution, so that the hydrogen gas mixed with the TRO solution could escape from the TRO solution fully and rapidly, thereby increasing dehydrogenation efficiency as well as reducing volume of the dehydrogenation tank.
2. The present invention provides the upper and the lower flow stirring modules 8 with different mesh sizes, to make the flow stirring module 8 with large mesh size separate larger bubbles from the TRO solution and the flow stirring module 8 with small mesh size separate smaller bubbles from the TRO solution, so that the bubbles with different size are separated sequentially and the dehydrogenation efficiency is further increased.
3. The present invention provides an atomizing spray 7 at the center of the upper portion of the dehydrogenation tank 6, so that hydrogen gas mixed with the TRO solution can escape from the TRO solution rapidly to increase the dehydrogenation efficiency.

In the end, exemplary embodiments are provided hereafter to describe the achievements of the present invention:

### Exemplary embodiment one:

The dehydrogenation technique of the present invention is used in a bulk ship with a dead weight tonnage of 35000 DWT and a rated treatment amount of the ballast water treatment system is 1000m³/h. The volume of the dehydrogenation tank is reduced by 55% and the dehydrogenation efficiency is greater than 99%, moreover, the operation of the system is reliable and the performance is stable without being effected by change of ship conditions.

### Exemplary embodiment two:

The dehydrogenation technique of the present invention is used in a chemical cargo ship of 72000DWT, whose rated treatment amount of the ballast water treatment system is 2000m³/h. The volume of dehydrogenation tank is reduced by 52% and the dehydrogenation efficiency is greater than 99%, moreover, the operation of the system is reliable and the performance is stable without being effected by change of ship conditions.

### Exemplary embodiment three:

The dehydrogenation technique of the present invention is used in an ore ship of 180000DWT, whose rated treatment amount of the ballast water treatment system is 3000m³/h. The volume of the dehydrogenation tank is reduced by 54% and the dehydrogenation efficiency is greater than 99%, moreover, the operation of the system is reliable and the performance is stable without being effected by change of ship conditions.

The descriptions above are embodiments of the present invention only and are not used, by any way, to limit the present invention. Although the present invention has been described with reference to the above embodiments, those embodiments are not used to limit the present invention, it will be apparent to anyone of ordinary skill in the art that slight changes or modifications to the described embodiments may be made to become equivalent embodiments without departing from the technique scope of the present invention, that is defined in the appended claims. On the contrary, any slight and simple changes, equivalent variations and modifications according to the disclosure of the present invention should fall within the technique scope of the present invention, as defined in the appended claims.

### Industrial Applicability

The present invention provides flow stirring modules in a dehydrogenation tank, which can fully stir the TRO solution flowing into the dehydrogenation tank, so that hydrogen gas mixed with the TRO solution could escape from the TRO solution fully and rapidly, thereby increasing dehydrogenation efficiency as well as reducing volume of the dehydrogenation tank.

## Claims

1. A dehydrogenation tank (6), comprises a flow stirring module (8) disposed at the middle of the dehydrogenation tank (6), **characterized by**
the dehydrogenation tank (6) comprises an atomization spray (7) disposed at the center of the upper portion of the dehydrogenation tank (6), and a flow stirring module (8) at the bottom of the dehydrogenation tank (6) for stirring a flowing solution, the flow stirring modules (8) at the middle and the bottom of the dehydrogenation tank (6) are both composed of stainless steel mesh, and each comprises at least two layers of flow stirring mesh (25) and a support (26) of flow stirring mesh for supporting and fastening the at least two layers of flow stirring mesh, the flow stirring mesh (25) and the support (26) of flow stirring mesh are both made of stainless steel type 316L, a distance between the atomization spray (7) and the top of the dehydrogenation tank (6) is approximately 10 cm and pressure inside a jetting pipeline of the atomization (7) is in a range of approximately 3 to 3.5 Bar; and
the mesh size of the flow stirring mesh (25) at the bottom of the dehydrogenation tank (6) being smaller than mesh size of the flow stirring mesh (25) at the middle of the dehydrogenation tank (6).

2. The dehydrogenation tank (6) of claim 1, wherein the mesh size of the flow stirring mesh (25) at the middle of the dehydrogenation tank (6) is approximately 5 by 5 mm and the mesh size of the flow stirring mesh (25) at the bottom of the dehydrogenation tank (6) is approximately 2 by 2 mm.

3. The dehydrogenation tank (6) of claim 1, wherein the at least two layers of flow stirring mesh (25) remain a distance of approximately 10 to 20 mm between the layers through the support (26) of the flow stirring mesh (25).

4. The dehydrogenation tank (6) of claim 1, wherein the dehydrogenation tank (6) is made of carbon steel.

## Patentansprüche

1. Dehydrierungstank (6), umfassend ein Strömungsrührmodul (8), das in der Mitte des Dehydrierungstanks (6) angeordnet ist, **gekennzeichnet durch**
der Dehydrierungstank (6) umfasst einen Zerstäubungsspray (7), der im Zentrum des oberen Abschnitts des Dehydrierungstanks (6) angeordnet ist, und ein Strömungsrührmodul (8) am Boden des Dehydrierungstanks (6) zum Rühren einer strömenden Lösung, wobei die Strömungsrührmodule (8) in der Mitte und am Boden des Dehydrierungstanks (6) beide aus Edelstahlgeflecht bestehen und jeweils mindestens zwei Lagen Strömungsrührgeflecht (25) und einen Träger (26) aus Strömungsrührgeflecht zum Tragen und Befestigen der mindestens zwei Lagen Strömungsrührgeflecht umfassen, wobei das Strömungsrührgeflecht (25) und der Träger (26) aus Strömungsrührgeflecht beide aus Edelstahl Typ 316L hergestellt sind, wobei ein Abstand zwischen dem Zerstäubungsspray (7) und der Oberseite des Dehydrierungstanks (6) etwa 10 cm beträgt und der Druck innerhalb einer Strahlrohrleitung der Zerstäubung (7) in einem Bereich von etwa 3 bis 3,5 bar liegt; und
die Maschenweite des Strömungsrührgeflechts (25) am Boden des Dehydrierungstanks (6) ist kleiner als die Maschenweite des Strömungsrührgeflechts (25) in der Mitte des Dehydrierungstanks (6).

2. Dehydrierungstank (6) nach Anspruch 1, wobei die Maschenweite des Strömungsrührgeflechts (25) in der Mitte des Dehydrierungstanks (6) etwa 5 mal 5 mm und die Maschenweite des Strömungsrührgeflechts (25) am Boden des Dehydrierungstanks (6) etwa 2 mal 2 mm beträgt.

3. Dehydrierungstank (6) nach Anspruch 1, wobei die mindestens zwei Lagen des Strömungsrührgeflechts (25) durch den Träger (26) des Strömungsrührgeflechts (25) hindurch einen Abstand von etwa 10 bis 20 mm zwischen den Lagen einhalten.

4. Dehydrierungstank (6) nach Anspruch 1, wobei der Dehydrierungstank (6) aus Kohlenstoffstahl hergestellt ist.

## Revendications

1. Réservoir de déshydrogénation (6) qui comprend un module d'agitation d'écoulement (8) disposé au milieu du réservoir de déshydrogénation (6), **caractérisé par le fait que**
le réservoir de déshydrogénation (6) comprend un pulvérisateur d'atomisation (7) disposé au centre de la partie supérieure du réservoir de déshydrogénation (6), et un module d'agitation d'écoulement (8) au fond du réservoir de déshydrogénation (6) pour agiter une solution en écoulement, les modules d'agitation d'écoulement (8) au milieu et au fond du réservoir de déshydrogénation (6) sont tous les deux composés d'un treillis en acier inoxydable, et comprennent chacun au moins deux couches de treillis d'agitation d'écoulement (25) et un support (26) de treillis d'agitation d'écoulement pour supporter et fixer les au moins deux couches de treillis d'agitation d'écoulement, le treillis d'agitation d'écoulement (25) et le support (26) du treillis d'agitation d'écoulement sont tous deux constitués d'acier inoxydable de type 316L, une distance entre le pulvérisateur d'atomisation (7) et le sommet du réservoir de déshydrogénation (6) est d'environ 10 cm et la pression à l'intérieur d'une canalisation de jet de l'atomisation (7) est dans une plage d'environ 3 à 3,5 bars ; et
la dimension de maille du treillis d'agitation d'écoulement (25) au fond du réservoir de déshydrogénation (6) est inférieure à la dimension de maille du treillis d'agitation d'écoulement (25) au milieu du réservoir de déshydrogénation (6).

2. Réservoir de déshydrogénation (6) selon la revendication 1, dans lequel la dimension de maille du treillis d'agitation d'écoulement (25) au milieu du réservoir de déshydrogénation (6) est d'environ 5 sur 5 mm et la dimension de maille du treillis d'agitation d'écoulement (25) au fond du réservoir de déshydrogénation (6) est d'environ 2 sur 2 mm.

3. Réservoir de déshydrogénation (6) selon la revendication 1, dans lequel les au moins deux couches du treillis d'agitation d'écoulement (25) restent à une distance d'environ 10 à 20 mm entre les couches à travers le support (26) du treillis d'agitation d'écoulement (25).

4. Réservoir de déshydrogénation (6) selon la revendication 1, dans lequel le réservoir de déshydrogénation (6) est constitué d'acier au carbone.
